Europäisches Patentamt

European Patent Office

Office européen des brevets

(19)

(11) **EP 0 957 559 A2**

(12) **EUROPEAN PATENT APPLICATION**

(43) Date of publication:
17.11.1999 Bulletin 1999/46

(51) Int Cl.$^6$: **H02H 7/26**

(21) Application number: 99660065.6

(22) Date of filing: 26.04.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: **13.05.1998 FI 981064**

(71) Applicant: **ABB Transmit Oy**
**65320 Vaasa (FI)**

(72) Inventors:
• **Kuisti, Harri**
**65100 Vaasa (FI)**
• **Saaranen, Jarmo**
**65370 Vaasa (FI)**

(74) Representative: **Peltonen, Antti Sakari et al**
**Oy Kolster Ab,**
**Iso Roobertinkatu 23,**
**P.O. Box 148**
**00121 Helsinki (FI)**

(54) **Method of synchronizing line differential protection device, and line differential protection device**

(57) A method of synchronizing a line differential protection device, the line differential protection device comprising a reference relay (2) and an adaptive relay (1). The method comprises the steps of continuously sampling the currents of all phases to obtain current samples; defining current indicators for all phases of an alternating current system (10) or indicators of a combined quantity formed from the phase currents in the reference relay (2) and the adaptive relay (1) based on each new current sample and the preceding M-1 or M/2-1 samples, M being the number of samples in a sequence at a nominal network frequency; monitoring the amplitude of a phase current of the alternating current system (10) or the amplitude of a combined quantity formed from the phase currents; storing the current indicators in both relays when said amplitude exceeds a predefined limit ($I_{st}$). The method further comprises the recurrent steps of transmitting the current indicators defined and stored by the reference relay (2) to the adaptive relay (1) and the current indicators defined and stored by the adaptive relay (1) to the reference relay (2); receiving and storing the received current indicators in both said relays (1, 2); defining a correction parameter ($\Delta n$) on the basis of the phase angle of the current indicators of the reference relay (2) and the adaptive relay (1) in the adaptive relay (1); storing indicators in the reference relay (2) at predefined intervals, counting forward a predefined number (N) of sampling intervals before storing new indicators; and storing indicators in the adaptive relay (1) at adaptive intervals, counting forward a number of sampling intervals corresponding to a sum of the predefined number (N) and the correction parameter ($\Delta n$) before storing new indicators.

Fig. 1

## Description

### BACKGROUND OF INVENTION

The invention relates to a method of synchronizing a line differential protection device, the line differential protection device comprising a reference relay and an adaptive relay located at different ends of a line to be protected.

Conventional numerical line differential protection is based on real-time comparison of current at different ends of a line. In a previously known protective method, a square wave that is in a certain phase with the primary current of the conductor to be protected is formed and transmitted in digital or analogue form to a relay at one end of the line. The receiving relay compares the transmitted square wave with the square wave it itself has produced. If the line is not a faulted one and if the measuring transformers or sensors are ideal, the square waves produced are cophasal when the known signal transmission delay from one relay to the other is compensated. Line differential protection equipment operating on this principle is called phase comparison protection equipment.

In so-called current differential protection, currents are compared as indicators, and the amplitude, as well as the phase angle, is taken into account. The indicators needed are usually computed by a known discrete Fourier filter, which generates complex numerical value indicators which rotate at a circular frequency of the network. The method requires more communications capacity than a phase comparison protection device, for the number of potential states is higher than when a bi-level square wave is transmitted.

Both the above methods can be modified for more moderate communications requirements: each phase current is then not subjected to comparison separately, but combined quantities are formed from the phase currents in some way, and an square wave to be transmitted or indicators are then computed from these quantities.

The common feature in many previously known synchronization methods is real-time comparison of the ends of a line. In this respect, the known numerical solutions are similar to solutions based on electromechanical or analogue-electronic relays and pilot wires, and on naturally real-time comparison of the measurements.

Real-time measurements can be accomplished in many previously known ways. U.S. Patent 4,470,093 teaches a method in which the relays synchronize their clocks by sending clock pulses from one relay to another, taking into account the transmission delay of the signal. In another previously known method, disclosed in U.S. Patent 4,322,768, the current readings of the relays are stored in a shift register, and the current readings transmitted by one relay are compared with the current readings of the other relay, taken a signal transmission delay earlier.

In the known solutions where the measurements are real-time measurements, the measurements at different ends must be rendered comparable by synchronizing them with each other. Because of this, the exact transmission delay of the signal must either be known or be measured at regular intervals. The methods based on the measurement of the transmission delay require that the transmission delay does not change between the instances of measurement. This sets certain requirements for signal processing both on the communications channel and internally to the relays. It is not sufficient that on average a communications link can transfer measurement data within a certain, sufficiently short time or at most with a certain delay, but the delay must remain unchanged. The same also applies to the signal processing internal to the relays, where the delays that occur must continuously be the same.

Due to the requirement of unchanged delays, some data transmission protocols and media that have an otherwise sufficient rate must be rejected. Also, the operations of the relays must be standardized, so that the lengths of the delays occurring in the internal signal processing can be ensured. Therefore the relays must not have operations whose switching on or off would change the load of the processor and thereby the lengths of the delays. This in turn leads to uneconomical use of the processor capacity of the device and makes it more difficult to integrate different operations into one and the same device according to the need.

U.S. Patent 4,939,617 teaches a method by which the real-time requirements for the measurements can be moderated. In the method, the measurements are synchronized at the zero-crossings of the primary current, which are the same for different relays when normal load current is flowing.

The synchronization based on the zero-crossings of the primary current has the following drawbacks. The method in question allows the transmission delays of the signals from one relay to another to deviate only by a few milliseconds. Further, when the method is applied it must be assumed that load current is flowing on the line to be protected before the line is faulted. However, this is not necessarily the case, and so the primary currents at the different ends of the line are not the same nor even co-phasal due to the capacitive charging current on the line. When a fault occurs externally to the line, the first sign reversal after the fault is thus not necessarily simultaneous at the different ends of the line, since the current before the fault has not been the same. The relays may thus be measuring apparent offset current and trip the line unnecessarily.

### BRIEF DESCRIPTION OF INVENTION

The object of the invention is to provide a method in which the above drawbacks are avoided and which enables synchronization of a line differential protection device in a more reliable way and using simpler equipment. The object is achieved by a method of the invention, which is characterized by comprising the steps of

continuously sampling the currents of all phases to obtain current samples,
defining current indicators for all phases of an alternating current system or current indicators combined from phase currents in a predefined manner, said indicators comprising the magnitude and the phase angle, in the reference relay and the adaptive relay based on each new current sample and the preceding M-1 or M/2-1 samples, M being the number of samples in a sequence at a nominal network frequency,
monitoring the amplitude of a phase current of the alternating current system or the amplitude of a combined quantity formed from the phase currents, storing said current indicators in both relays when said amplitude exceeds a predefined limit, the method further comprising the recurrent steps of
transmitting the current indicators defined and stored by the reference relay to the adaptive relay and the current indicators defined and stored by the adaptive relay to the reference relay,
receiving and storing the received current indicators in both said relays,
defining a correction parameter ($\Delta$n) in the adaptive relay, based on the phase angle of the current indicators of the reference relay and the adaptive relay, storing indicators in the reference relay at predefined intervals, counting forward a predefined number of sampling intervals before storing new indicators, and
storing indicators in the adaptive relay at adaptive intervals, counting forward a number of sampling intervals that corresponds to the sum of the predefined number and the correction parameter ($\Delta$n) before storing new indicators.

The method of the invention is based on the reference relay storing and transmitting current indicators that it has formed from current samples to the adaptive relay after a predefined number of samples (N), counting from the transmission of the previous indicator. The adaptive relay, in turn, stores and transmits current indicators that it has formed from current samples to the reference relay after a number of samples corresponding to the sum (N+$\Delta$n) of the predefined number of samples (N) and the correction parameter ($\Delta$n), counting from the transmission of the previous indicator, whereby the measurements of the adaptive relay remain in sync with the measurements of the reference relay. When the amplitude of the predefined phase current of the alternating current system or the amplitude of the combined quantity formed from the phase currents in a predefined manner is below a predefined limit, an adaptive shift to voltage-based synchronization is performed. The voltage-based synchronization is abandoned when the current exceeds a certain predefined limit.

In the solution of the invention, the measurements of the relays are kept in sync so that one relay automatically adapts to the measurements of the other relay when normal load current is flowing. External synchronization of the relays is then not needed. The clocks of the relays can show notably different times without that this would affect the operation of the solution provided by the invention. Also, the delays in the communications and in the signal processing internal to the relays can vary without affecting the operation of the method.

In the solution of the invention, the comparability of the current indicators measured by different relays before the adaptive relay has had time to adapt in accordance with the reference relay by computing the correction parameter ($\Delta$n) for the first time when the load current has started to flow in the line is based on the idea that if the line is not faulted, both the reference relay and the adaptive relay measure the same current and thereby store the first current indicators at the same moment. If, on the other hand, the line is faulted, then the currents at the different ends of the line are not the same and even the first few current indicators are then notably different from each other, and the adaptation process based on the computation of the correction parameter ($\Delta$n) fails to take place. The actuator or actuators are then controlled after a predefined period of time.

Unlike the solutions based on real-time comparison of measurements, the solution of the invention does not require a specific protective relay with well-known signal processing delays for line differential protection. The solution is thus also well suited to integrated protective relays, in which the processor load can vary with the situation, whereby the delays can also vary in length.

The solutions based on the real-time comparison of measurements require that the delays on the data transmission connection remain relatively constant. An abrupt change of even a few milliseconds in a transmission delay would unnecessarily trip the relays. The synchronization method of the invention removes this restriction, whereby the transmission delay may vary at random without that this would affect the selectivity of the protection. The solution of the invention thus allows more freedom in the selection of the communications link and protocol than the other solutions. The greatest allowed value of the transmission delay, however, must naturally be taken into account when the overall period of activity of the protection is estimated.

The invention also relates to a method of synchronizing a line differential protection device, the line differential protection device comprising a reference relay and an adaptive relay located at different ends of a line to be protected, the method being characterized in that when the phase current of an alternating current system or the combined quantity formed from the phase currents in some way is below a predefined limit, the method comprises the steps of

sampling one or more main or phase voltages of an alternating current system in both relays to provide voltage samples,

generating reference signals in both relays with the aid of the voltage samples, the reference signals being cophasal with each other or the offset of the signals being known,

monitoring the phase angle of the reference signal in both relays,

continuously sampling the currents of all phases to provide current samples,

defining current indicators for all phases of the alternating current system or current indicators combined from the phase currents in a predefined manner, said phase indicators comprising the magnitude and the phase angle, in both relays based on each new current sample and the preceding M-1 or M/2-1 samples, M being the number of samples in a sequence at a nominal network frequency, the method further comprising the recurrent steps of storing the current indicators to be transmitted at those instants when a predefined number of sampling intervals have passed, counted from the instant when the phase angle of the reference signal has last passed a predefined value,

transmitting the current indicators defined by the reference relay to the adaptive relay and the current indicators defined by the adaptive relay to the reference relay, and

receiving and storing the received current indicators in both relays.

The solution according to the invention based on defining the phase of the reference signal generated with the aid of primary voltages makes reliable implementation of relay protection possible even when no load current is flowing on the line to be protected or the load current is very weak. In situations where the current-based synchronization limit is exceeded at different ends of the line at different times or is not exceeded at all, the reference signal formed from the primary voltages of the alternating current system is used in the invention to synchronize the measurements.

The invention also relates to a line differential protection device comprising an adaptive relay, a reference relay, current defining means and voltage defining means defining the characteristics of the alternating current system, arranged in conjunction with the relays; said relays being arranged to control actuators, such as switches, associated with the alternating current system; and said the relays comprising data transmission means, which are arranged to send each other data on the quantities defined and to receive such data, and processing means, which comprise internal memory, said means being arranged to modify and compare the data to be transmitted and the data received; the line differential protection device being characterized in that the processing means of the adaptive relay are further arranged to form a correction parameter on the basis of the transmitted and the received data, and that the processing means are arranged to select the synchronization method on the basis of the amplitude data of the current in the alternating current system defined by the current defining means.

The above kind of line differential protection device makes it possible to achieve the advantages provided by the method of the invention in a simple and reliable manner.

BRIEF DESCRIPTION OF FIGURES

The invention will now be described in greater detail by means of preferred embodiments and with reference to the attached drawings, in which

Fig. 1 shows a schematic view of a line differential protection device according to the invention,
Fig. 2 illustrates the principle of starting synchronization, and
Fig. 3 illustrates the principle of adaptive changing of the synchronization method.

DETAILED DESCRIPTION OF INVENTION

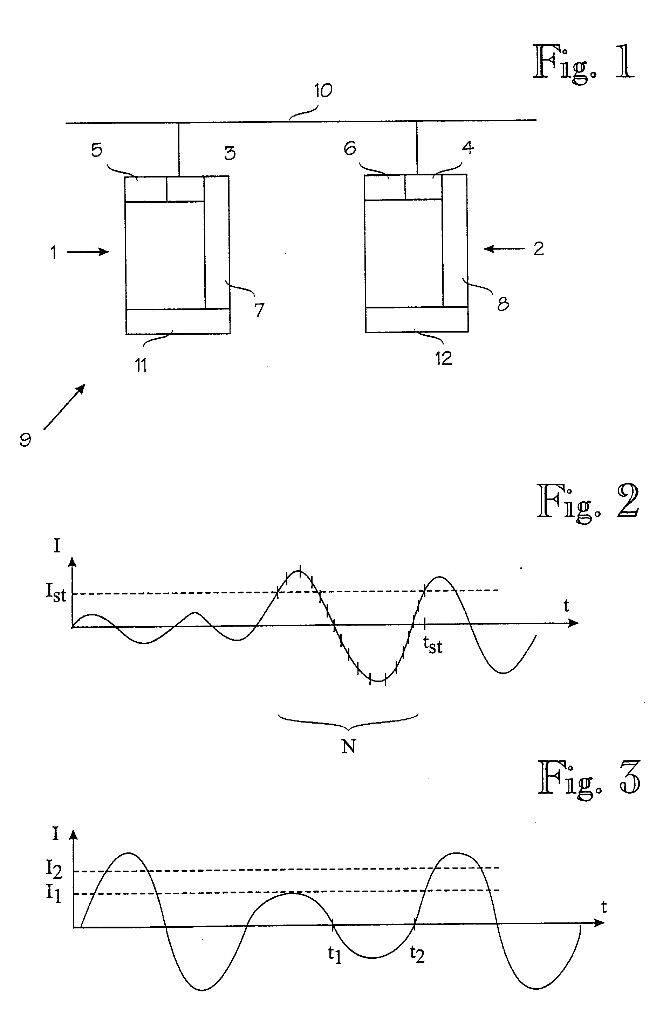

Fig. 1 shows a line differential protection device 9 comprising two co-operating protective relays 1, 2 connected in conjunction with an alternating current system 10 to be protected. The alternating current system can be, for example, a line and a transducer optionally arranged on the line. The line differential protection device thereby operates as short-circuit protection and ground contact protection of the line and the transducer. To effect synchronization, one of the relays of the line differential protection device of the invention operates as the reference relay 2 and the other as the adaptive relay 1.

In the method of the present invention, the amplitude of a phase current of the alternating current system or the amplitude of a combined quantity formed from the phase currents in some way is monitored in both relays. To enable the monitoring of the amplitude, both relays comprise current defining means 3, 4 by which the current is sampled at a constant sampling frequency. From the samples are formed current indicators and from the current indicators is formed data about the magnitude of the amplitude. As the current starts to flow on the line and said amplitude exceeds a predefined limit $I_{st}$, both relays start to count sampling intervals. That threshold value $I_{st}$ of the current at which the procedure is started is set to be significantly higher than the capacitive charging current of the line so that the instant when the threshold value is exceeded would be as identical as possible in both relays. When a predefined number of sampling intervals have passed from the instant when the threshold value has been exceeded, for example N intervals have passed in Fig. 2, the current indicators transmitted from one relay to the other are stored. In Fig. 2, the time instant when the current indicators are stored is $t_{st}$. The current is sampled in all phases of the alternating current system in both relays 1, 2. The current indicators are complex quantities, which can be described as rotating vectors with a magnitude and a phase angle. The current indicators can be defined by using a known digital filtering method, for example discrete Fourier filtering.

The defined current indicators of all phases of both relays or the combined indicators formed from them in a predefined manner are stored in memory blocks internal to the relays for future operations. The incorporation of the current indicators into one indicator in this way can be performed, for example, by multiplying all current indicators ($i_1$, $i_2$, $i_3$) of the alternating current system by an unequal constant ($c_1$, $c_2$, $c_3$) and by adding the so obtained scaled indicators together. The constant used can be either a real number or a complex number. The current indicators can also be combined in some other way.

When the current indicators have been defined and stored, the defined current indicators are transmitted to a relay at the other end of the line. The adaptive relay 1 then transmits the current indicators it has defined to the reference relay 2, and the reference relay 2 transmits the current indicators it has defined to the adaptive relay 1. The current indicators are transferred by an appropriate previously known data transmission procedure. The current indicators transmitted are received and stored in the relays, whereby the relays have indicator data obtained from different ends of the line at the same time instant.

The indicators defined at the same instant are compared in the relays, and if the indicators differ from each other by less than a predefined value, then the condition is interpreted as being a normal, non-faulted condition. The adaptive relay 1 then synchronizes the indicator measurements it has performed with the indicators of the other relay, i.e. the reference relay 2, using a correction parameter $\Delta n$. The correction parameter is preferably computed with the aid of the phase angles of the indicators compared. The parameter $\Delta n$ can be computed by first computing phase-specific connection parameters $\Delta n_k$ for all phases of the alternating current system by the formula $\Delta n_k = \frac{N}{2\pi}(\varphi_{k2} - \varphi_{k1})$, where N is the number of samples per sequence, k is the index of the phase, $\varphi_{k1}$ is the phase angle of the current indicator of the phase k measured by the adaptive relay in radians, and $\varphi_{k2}$ is the phase angle of the current indicator of the phase k measured by the reference relay in radians. The same procedure is performed on all phases, and the mean value of the phase-specific correction parameters, rounded off to the nearest integer, is used as the correction parameter. Instead of the phase-specific current indicators, it is also possible to use the indicators of the combined quantity formed from the phase currents in the comparison of the different relays. The parameter $\Delta n$ can then be computed on the basis of the indicators of the combined quantity, using the formula presented above.

Before the transmission of the next current indicators, the reference relay 2 counts forward a predefined number $N_1$ of samples. $N_1$ can be of the same order as the number N of samples per sequence, whereby one current indicator per network sequence is transmitted. It is also possible to transmit more indicators per network sequence, whereby the relays operate faster if the protected section is faulted, and the stability of the relays in case of faults external to the protected section can be ensured more easily. In a normal non-faulted condition, the adaptive relay 1 counts forward a number of samples corresponding to the sum $N_1 + \Delta n$ of the predefined number $N_1$ and the correction parameter $\Delta n$ before the next current indicators are stored and transmitted. A new value is computed for the parameter $\Delta n$ every time the indicators transmitted by the different relays are compared. The use of a correction parameter corrects any minor differences in the sampling frequencies of the relays and, corrected in this way, the current indicators measured by the relays are always associated with the same time instants, although the relays are not synchronized in any way from the outside. When the synchronization has been effected in this way, the relays continue to transmit indicators to each other, the reference relay 2 transmitting at intervals of $N_1$ samples and the adaptive relay 1 transmitting at intervals of $N_1 + \Delta n$ samples.

If the indicators compared differ from each other by more than a predefined value, then both relays count forward $N_1$ samples before the next current indicators are stored and transmitted, without performing adaptation by computing the correction parameter $\Delta n$. If the indicators measured by the relays differ from each other by more than a predefined value for a pre-set number of times in succession, then the relays perform tripping and the actuators arranged in conjunction with the relays isolate the faulted section of the line from the rest of the network.

If before the fault there is not sufficient current $I_{st}$ for the initial synchronization of the sampling on the line and there occurs a fault outside the protected section, then the fault current is the same for both relays and even the first few indicators compared are stored at different ends of the line at the same time. The relays do then not detect the offset current and no tripping takes place. If the line to be protected is faulted, then the amplitude of the current may exceed said threshold value at different ends of the line at different times. The relays do then not necessarily store the current indicators at exactly the same instants. The difference in the time instants, however, is small, if the limit is exceeded at all at both ends of the line. The difference in the time instants slightly increases or decreases the offset current detected, but when the protected section is faulted, the offset current is in any case sufficiently great to cause tripping. If the fault current at one end of the line is so small that the current limit is not exceeded at all, the current at that end is interpreted as being zero, and the offset current is computed on the basis of this, which results in appropriate tripping.

In the relays, the amplitude of a phase current flowing on the line or the amplitude of a combined quantity formed from the phase currents in some way is monitored continuously. If it is detected that the amplitude of the current drops below a predefined limit $I_1$ or if the synchronization limit $I_{st}$ is exceeded only at one end of the line, the above-described current-based synchronization is abandoned for supplementary voltage-based synchronization. Fig. 3 illustrates an example in which the amplitude of the current drops below limit $I_1$, whereby a shift to voltage-based synchronization is performed at time instant $t_1$.

In voltage-based synchronization one or more main or phase voltages of the network are sampled and reference signals are formed in both relays from a combined quantity obtained from one primary voltage or a plural number of primary voltages in some way, the reference signals in the relays at the different ends of the line either being co-phasal or the offset of the signals being known. When the procedure is started, both relays count forward a predefined number of sampling intervals after the phase angle of the reference signal has passed a certain value defined beforehand for the relay concerned, and subsequently stores the first few current indicators. The next indicators are stored during the voltage-based synchronization at intervals dependent on the network frequency. The new current indicators are preferably stored at an instant when a certain predefined number of sampling intervals have passed, counted from the instant when the phase angle of the reference signal has passed a certain predefined value, which may be the same as used when storing the first few current indicators. If indicators are stored and transmitted more than once per network sequence, it is advantageous to define several phase angle values for the reference signal and monitor when they will be exceeded.

When a phase current of the alternating current system 10 or a sum current formed from the phase currents in some way exceeds a predefined threshold value $I_2$ at both ends of the line to be protected, current-based synchronization is re-assumed. Fig. 3 shows, by way of an example, a time instant $t_2$ when the amplitude of the current exceeds limit $I_2$ and a shift back to current-based synchronization is performed. If the amplitude of the current again drops below $I_1$, voltage-based synchronization is adaptively returned to. This kind of change of the basis of synchronization is advantageous, since the voltages at the different ends of the line are the same with a sufficient accuracy only at small current values, and since on the other hand the capacitive charging current has little effect at greater current values and current-based synchronization is reliable. Further, it is advantageous to use current limits $I_1$, $I_2$ of different magnitude when one synchronization method is abandoned for another, so as to make it unnecessary to change the synchronization method frequently as the current varies around the threshold value. The change of the synchronization method can be performed using various logics, but the essential point is that currents are used for the synchronization when the current exceeds a certain limit $I_1$ and that a reference signal computed from the primary voltages is used for the synchronization of the current measurements when the current drops below another lower limit $I_2$.

When the line is open, the voltages at the two ends of the line are not necessarily the same. Because of this, the relays must send each other data on the state of the switch they control. The data can be presented, for example, to such an effect that the voltage-based synchronization and the transmission of the indicators from one relay to the other are not started until the switches at both ends of the line are closed.

In an embodiment of the invention, the relays open the switches if the indicators of even one current or the indicators of a combined quantity formed from the phase currents, measured by different relays, differ from each other by more than a predefined value for at least a predefined time. The fault is then in the protected section.

In another embodiment of the invention, when the amplitudes of the phase currents measured by the relays or the amplitudes of a combined quantity formed from the phase currents differ from each other by more than a predefined value for at most a predefined time even in one phase, the relays open the switches. The fault is also then in the protected section.

Both relays 1, 2 of the line differential protection device implementing the method of the invention comprise processing means (11, 12). On the basis of the current data obtained from the current measuring means, the processing means define the most advantageous synchronization method for a given moment. The processing means thus adaptively select the synchronization method to be used at a given moment on the basis of the amplitude of the current. When normal load current is flowing, the processing means select current-based synchronization, and if the current flowing on the line is significantly smaller than normal load current, then the processing means select voltage-based synchronization.

It will be obvious to those skilled in the art that with the introduction of technical advances, the basic idea of the invention can be realized in many different ways. The invention and its embodiments are thus not limited to the above examples but can vary within the scope of the attached claims.

## Claims

1. A method of synchronizing a line differential protection device (9), the line differential protection device comprising a reference relay (2) and an adaptive relay (1) located at different ends of a line to be protected, **characterized** by comprising the steps of

   continuously sampling the currents of all phases to obtain current samples,
   defining current indicators for all phases of an alternating current system (10) or current indicators combined from the phase currents in a predefined manner, said indicators comprising the magnitude and the phase angle, in the reference relay (2) and the adaptive relay (1) based on each new current sample and the preceding M-1 or M/2-1 samples, M being the number of samples in a sequence at a nominal network frequency,
   monitoring the amplitude of a phase current of the alternating current system (10) or the amplitude of a combined quantity formed from the phase currents,
   storing said current indicators in both relays when said amplitude exceeds a predefined limit ($I_{st}$), the method further comprising the recurrent steps of
   transmitting the current indicators defined and stored by the reference relay (2) to the adaptive relay (1) and the current indicators defined and stored by the adaptive relay (1) to the reference relay (2),
   receiving and storing the received current indicators in both said relays (1, 2),
   defining a correction parameter ($\Delta n$) in the adaptive relay (1), based on the phase angle of the current indicators of the reference relay (2) and the adaptive relay (1),
   storing indicators in the reference relay (2) at predefined intervals, counting forward a predefined number (N) of sampling intervals before storing new indicators, and
   storing indicators in the adaptive relay (1) at adaptive intervals, counting forward a number of sampling intervals that corresponds to the sum of the predefined number (N) and the correction parameter ($\Delta n$) before storing new indicators.

2. A method according to claim 1, **characterized** in that the defining of the current indicators comprises a step in which the current indicator is computed using a digital filter, such as a discrete Fourier filter.

3. A method according to claim 1 or 2, **characterized** in that the defining of the correction parameter ($\Delta n$) comprises the steps of

   defining a phase-specific correction parameter ($\Delta n_k$) for each phase of the alternating current system from the formula $\Delta n_k = \frac{N}{2\pi}(\varphi_{k2} - \varphi_{k1})$, where N is the number of current samples per sequence, k is the index of the phase, $\varphi_{k1}$ is the phase angle of the current indicator of the phase k measured by the adaptive relay in radians, and $\varphi_{k2}$ is the phase angle of the current indicator of the phase k measured by the reference relay in radians, both phase angle quantities relating to the same phase of the alternating current system, and
   selecting the mean value of the phase-specific correction parameters ($\Delta nk$) of the alternating current system, rounded off to the nearest integer, as the correction parameter ($\Delta n$).

4. A method according to claim 1 or 2, **characterized** in that the defining of the correction parameter ($\Delta n$) comprises the step of

   defining the correction parameter ($\Delta n$) with the aid of an indicator computed from the combined quantity formed from the phase currents of the alternating current system in a predefined manner by the formula $\Delta n = \frac{N}{2\pi}(\varphi_2 - \varphi_1)$, where N is the number of current samples per sequence, $\varphi_1$ is the phase angle of the current indicator measured by the adaptive relay in radians, and $\varphi_2$ is the phase angle of the current indicator measured by the reference relay in radians.

5. A method of synchronizing a line differential protection device (9), the line differential protection device comprising a reference relay (2) and an adaptive relay (1) located at different ends of a line to be protected, **characterized** in that when the phase current of an alternating current system or the combined quantity formed from the phase currents in some way is below a predefined limit ($I_1$), the method comprises the steps of

   sampling one or more main or phase voltages of an alternating current system (10) in both relays (1, 2) to provide voltage samples,
   generating reference signals in both relays (1, 2) with the aid of the voltage samples, the reference signals being cophasal with each other or the offset of the signals being known,
   monitoring the phase angle of the reference signal in both relays,
   continuously sampling the currents of all phases to provide current samples,
   defining current indicators for all phases of the alternating current system (10) or current indicators combined from the phase currents in a predefined manner, said phase indicators comprising the magnitude and the phase angle, in both relays (1, 2) based on each new current sample and the preceding M-1 or M/2-1 samples, M being the number of samples in a sequence at a nominal network frequency, the method further comprising the recurrent steps of

storing the current indicators to be transmitted at those instants when a predefined number ($N_u$) of sampling intervals have passed, counted from the instant when the phase angle of the reference signal has last passed a predefined value,

transmitting the current indicators defined by the reference relay (2) to the adaptive relay (1) and the current indicators defined by the adaptive relay (1) to the reference relay (2), and receiving and storing the received current indicators in both relays (1, 2).

6. A method according to claim 5, **characterized** by further comprising a phase in which data is transmitted from the adaptive relay to the reference relay and from the reference relay to the adaptive relay on the state of the switches controlled by the relays (1, 2).

7. A method according to any one of claims 1 to 6, **characterized** by further comprising the steps of

comparing the current indicators transmitted and received by the relays (1, 2) associated with the same time instant, and controlling the switches arranged in conjunction with the relays (1, 2) if a predefined number of successive indicators compared differ from each other by more than a predefined value.

8. A method according to any one of claims 1 to 7, **characterized** by further comprising the steps of

comparing the amplitudes of the currents defined by the adaptive relay (1) and the reference relay (2), and controlling the switches arranged in conjunction with said relays if the amplitudes of the currents compared differ from each other by more than a predefined value for at least a predefined number of times in succession.

9. A line differential protection device (9) comprising an adaptive relay (1), a reference relay (2), current defining means (3, 4) and voltage-defining means (5, 6) defining the characteristics of an alternating current system (10), arranged in conjunction with the relays; said relays (1, 2) being arranged to control actuators, such as switches, associated with the alternating current system; and said relays (1, 2) comprising data transmission means (7, 8), which are arranged to send each other data on the quantities defined and to receive such data, and processing means (11, 12), which comprise internal memory, said means (11, 12) being arranged to modify and compare the data to be transmitted and the data received, **characterized** in that the processing means (11) of the adaptive relay (1) are further arranged to form a correction parameter ($\Delta n$) on the basis of the transmitted and the received data, and that the processing means (11, 12) are arranged to select the synchronization method on the basis of the amplitude data of the current of the alternating current system defined by the current defining means (3, 4).

10. A line differential protection device (9) according to claim 9, **characterized** in that the processing means (11, 12) are arranged to form current indicators comprising the magnitude and the phase angle.

Fig. 1

Fig. 2

Fig. 3